# EUROPEAN PATENT SPECIFICATION

(11) **EP 4 346 061 B1**
(45) Date of publication and mention of the grant of the patent: **18.03.2026**
(21) Application number: 23200051.3
(22) Date of filing: 27.09.2023
(51) Int. Cl.: H02J 7/00

(54) **POWER STORAGE DEVICE AND METHOD FOR DISCHARGING THE SAME**
ENERGIESPEICHERVORRICHTUNG UND VERFAHREN ZUM ENTLADEN DAVON
DISPOSITIF DE STOCKAGE D'ÉNERGIE ET SON PROCÉDÉ DE DÉCHARGE

(30) Priority: 28.09.2022 US 202263377411 P
(43) Date of publication of application: 03.04.2024
(73) Proprietor: GOGORO INC., Wanchai, Hong Kong (HK)
(72) Inventor: HUANG, Wei-Tsung, Taoyuan City 333 (TW); CHEN, I-Sheng, Taoyuan City 333 (TW); HSU, Liang-Yi, Taoyuan City 333 (TW)
(74) Representative: Viering, Jentschura & Partner mbB Patent- und Rechtsanwälte

(56) References cited:
- EP-B1- 2 823 433
- CN-A- 111 162 331
- JP-A- 2007 060 353
- JP-A- 2009 016 131
- JP-A- 2019 030 082
- US-A1- 2022 171 834
- US-B2- 10 312 723

## Description

### BACKGROUND

### Field of Invention

The present disclosure relates to a power storage device and a method for discharging the same.

### Description of Related Art

Among various types of equipment products driven by electric power, those using portable and rechargeable power storage device (e.g., storage batteries, supercapacitors or ultracapacitors) rather than relying on utility power charging as main power source are especially of great developmental potential. While applicable range of such equipment products has grown diverse, in order to ensure their certain level of operation (e.g., communication with external devices or power storage devices) by internal electronic components during power-off (e.g., during inactive state, and exhaustion or swapping of power storage devise for the equipment products), a backup battery (e.g., lead-acid battery) is usually disposed additionally to provide fundamental electric power for keeping these internal electronic components in awake state and support operation when the equipment products is not powered on.

However, due to different requirements for usage of power storage devices, situations where the above-mentioned equipment products are incapable of disposing or in need of omitting backup batteries may occur under considerations such as fabrication costs and structural arrangement difficulties. These situations (or situations where backup batteries of equipment products are damaged) will all result the internal electronic components fail to stay operative during power-off of the equipment products.

Therefore, one of the urgent needs for the current industry is how to propose a power storage device and a method for discharging the same and solve the above problems.

CN 111162331 A discloses a discharging system comprising a battery, a load, a load detection unit for detecting the connection state between the load and the battery and a controller for controlling the working mode of the battery. When the load is not connected, the battery is in a low power consumption state, and when the load is connected, the battery is in a discharging state, so that the low power consumption requirement of the battery is met. In addition, the discharging system is also provided with a verification process, the discharging process needs to be carried out based on the power utilization request of the load, if the power utilization request of the load passes the authentication, the battery enters a discharging state, otherwise, the battery is in a low power consumption state.

JP 2007060353 A discloses that, when a battery pack is connected, a GSM, UMTS portable telephone performs initial communication with a memory in the battery pack. After the completion of authentication, power feeding for charging and discharging for using the portable telephone is enabled by a switch in the GSM, UMTS portable telephone. In addition, unless the authentication is completed, the usage of the battery pack is prohibited by the switch so that the power feeding for charging or the discharging for the usage of the portable telephone is prevented.

EP 2823433 B1 discloses accessory device authentication techniques. In one or more examples, connection of an accessory device to a host computing device is detected. Responsive to the detection, an authentication sequence may occur to verify an identity and/or capabilities of the accessory device. Upon successful authentication of the accessory device, the host device may authorize the accessory device for power exchange interactions with the host device. The host device may then draw supplemental power from a power source associated with the authorized accessory device, such as a battery or power adapter. The host device may also enable the accessory device to obtain and use power supplied by the host device in some scenarios. Power exchange between a host device and an authorized accessory may be managed in accordance with capabilities of the accessory device that are identified during authentication.

US 2022/0171834 A1 discloses an electronic device including a communication unit and a control unit. The communication unit performs authentication communication to authenticate an external device connected to the electronic device. The control unit sets a time limit of the authentication communication to a predetermined time in a case where the external device is a first device. The predetermined time is a time that is longer than a time required for authentication communication between the first device and the electronic device, and is shorter than a time required for authentication communication between the electronic device and a second device different from the first device.

### SUMMARY

According to the present invention, a power storage device according to claim 1 and a method for discharging a power storage device according to claim 5 are provided. Preferred embodiments are further defined in the dependent claims.

For achieving the objectives discussed above, a power storage device is disclosed. The power storage device includes a power storage unit configured to store electric power; an electrical connection unit, configured to be electrically connected with the power storage unit and coupled with a load device; and a device management unit electrically connected with the power storage unit and configured to: detect a connection event regarding coupling of the electrical connection unit with another electrical connection unit of the load device; in response to the connection event, output the electric power to the load device through the electrical connection unit under a discharging limit; and confirm an authentication result between the power storage device and the load device during output of the electric power under the discharging limit.

The device management unit is further configured to: lift the discharging limit for output of the electric power if the authentication result indicates to be successful authentication.

In some embodiments, the device management unit is further configured to: prohibit output of the electric power to the load device if the authentication result indicates to be failed authentication.

In some embodiments, a means for the device management unit confirming the authentication result indicates to be failed authentication comprises confirming the device management unit failing to receive the authentication result within a time limit confined by the discharging limit, and wherein the time limit confines the electric power to be output in a time period less than or equal to 15 seconds.

In some embodiments, the discharging limit confines the electric power of the power storage unit to be output at a power value less than or equal to one-twentieth of a maximum output power value of the power storage device; or the discharging limit confines the electric power of the power storage unit to be output at a current value less than or equal to one-twentieth of a maximum output current value of the power storage device.

In the present invention, the authentication result is reported back to the device management unit by a bridge control unit, and the bridge control unit is electrically connected with another electrical connection unit on the load device.

A means for the device management unit confirming the authentication result indicates to be failed authentication comprises the following conditions: the bridge control unit fails to verify a first authentication information from the device management unit; and the bridge control unit fails to verify a second authentication information from a load control unit of the load device.

A method for discharging a power storage device is also disclosed. The method includes: detecting a connection event regarding coupling of the power storage device with a load device; in response to the connection event, enabling the power storage device to conduct an electric power output to the load device under a discharging limit; and confirming an authentication result between the load device and the power storage device during the electric power output under the discharging limit by the power storage device.

The method further includes: if the authentication result indicates to be successful authentication, lifting the discharging limit of the electric power output by the power storage device.

**In** some embodiments, the method further includes: if the authentication result indicates to be failed authentication, prohibiting the electric power output by the power storage device.

**In** some embodiments, a means for confirming the authentication result indicates to be failed authentication comprises confirming the power storage device failing to receive the authentication result within a time limit confined by the discharging limit, and the time limit confines a time for the electric power output to be less than or equal to 15 seconds.

**In** some embodiments, the discharging limit confines a power value of the electric power output to be less than or equal to one-twentieth of a maximum output power value of the power storage device; or the discharging limit confines a current value of the electric power output to be less than or equal to one-twentieth of a maximum output current value of the power storage device.

In the present invention, the authentication result is reported back to the power storage device by a bridge device, and the bridge device is electrically connected to the load device.

A means for confirming the authentication result indicates to be failed authentication comprises the following conditions: the bridge device fails to verify a first authentication information from the power storage device; and the bridge device fails to verify a second authentication information from the load device.

In some embodiments, detecting the connection event regarding the power storage device coupling with the load device comprises: sensing a closed-circuit condition of an electrical connection between the power storage device and the load device.

In some embodiments, the method further includes: confirming an electrically supplied state of the load device; and if the electrically supplied state indicates to be supplied with electric power, enabling the power storage device to confirm the authentication free from the discharging limit.

Based on the above description, the power storage device and the method for discharging the same according to the present invention precondition the power storage device to conduct electric power output under a discharging limit for a control unit on a load device, and only lifts the discharging limit when the authentication(s) between the power storage device and the load device indicates successful. Therefore, if the load device is configured without a backup battery or with a damaged backup battery, the operation of the load control unit can be maintained through the electric power under the discharging limit, thereby achieve mutual authentication with the power storage device, and prevent damage caused to the load device when bearing excessive electric power upon connected to the power storage device.

### BRIEF DESCRIPTION OF THE DRAWINGS

Aspects of the present invention are best understood from the following detailed description when read with the accompanying drawings. It should be noted that the sizes and relative positions of elements in the drawings are not necessarily drawn to scale, and some of these elements have been arbitrarily enlarged and positioned to improve drawing clarity. Furthermore, specific shapes of elements as drawn are not intended to convey any information about the actual shape of the particular element and are chosen merely for identification in the drawings.
FIG. 1 is a schematic diagram of components of a system according to some embodiments of the present invention.
FIG. 2 is a flowchart of steps of a method for discharging a power storage device according to some embodiments of the present invention.
FIG. 3A to FIG. 3E are diagrams illustrating implementation aspects of each step in FIG. 2.
FIG. 4 is a flow chart of detailed steps in FIG. 2.
FIG. 5 is a flow chart of detailed steps in FIG. 2.

### DETAILED DESCRIPTION

Embodiments of the present invention will be described below in accompany with related drawings, and some specific details will be set forth in order to provide a thorough understanding of various disclosed embodiments. One skilled in the art will recognize, however, that the embodiments may be practiced without one or more of these specific details, or with other methods, components, materials, and the like. In the drawings, the same reference numerals indicate the same or similar elements or method flow.

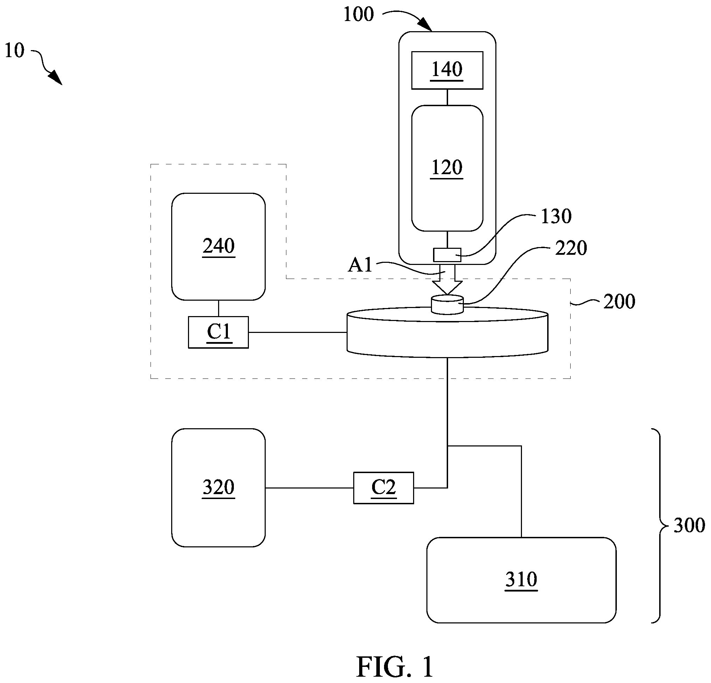

FIG. 1 is a schematic diagram of components of a system 10 of the present invention. In the present embodiment, the system 10 mainly includes a power storage device 100, a bridge device 200, and a load device 300. Specifically, the load device 300 is an equipment product driven by electric power; the power storage device 100 is configured to provide the electric power to the load device 300 and enable operation of the load device 300; and the bridge device 200 is electrically connected to the load device 300 and configured to allow the power storage device 100 detachably coupled (e.g., connected along a direction indicated by the arrow A1) to the load device 300. From the configuration of said system 10, it can be understood that the bridge device 200 in the system 10 provides a bridging path between the power storage device 100 and the load device 300, of which the electric power of the power storage device 100 is transmitted to the load device 300 through the bridging path.

In some embodiments, the load device 300 is an electric vehicle, and the power storage device 100 is a battery pack, in particular an exchangeable battery pack. The load device 300 is formed with an accommodating space (not depicted), where the bridge device 200 is installed at the bottom of the accommodating space and is electrically connected with the load component(s) 310 and the load control unit 320 of the load device 300. Furthermore, the power storage device 100 is configured to be arranged in the accommodating space and supply electric power to the load component(s) 310 and the load control unit 320 of the load device 300 through the bridge device 200.

In some embodiments, in addition to providing the bridging path between the power storage device 100 and the load device 300, the bridge device 200 can be further configured to conduct authentication for the power storage device 100 and/or the load device 300. For example, the bridge device 200 may conduct authentication for the power storage device 100 to verify that the power storage device 100 is a battery pack authorized to supply electric power to the correspondingly authorized load device 300. In another example, the bridge device 200 may also conduct an authentication for the load device 300 to verify that the load device 300 is an electric vehicle authorized to receive electric power from the correspondingly authorized power storage device 100. In some embodiments, only when the authentication between the bridge device 200 and the power storage device 100 and the authentication between the bridge device 200 and the load device 300 both indicated successful will the bridge device 200 transmit the electric power of the power storage device 100 to the load device 300. In some other embodiments, if either the authentication between the bridge device 200 and the power storage device 100 or the authentication between the bridge device 200 and the load device 300 indicates a failure, the power storage device 100 will not supply electric power to the load device 300.

In some alternative embodiments, the load device 300 can also be other equipment products electrically driven by the power storage device 100. Said other equipment products include, but not limited to, products such as intelligent parking bollards using the power storage device 100 as power source, smart signal lights using the power storage device 100 as uninterruptible power supply, and battery swap stations, or equipment products omitting backup batteries, such as micro-electric vehicles, light vehicles, electric mechanical or agricultural tools, and battery chargers.

In some embodiments, the power storage device 100 and the bridge device 200 are respectively configured with electrical connection units 130 and 220, which can be male and female parts (e.g., plugs and sockets) used for establishing an electrical connection between the power storage device 100 and the bridge device 200 (and subsequently, the load device 300). The bridge device 200 is configured to conduct authentication for the power storage device 100 and/or the load device 300 in response to a connection event where the electrical connection units 130 and 220 are coupled to each other and form an electrical connection. In some embodiments, the bridge device 200 can be configured to receive authentication information from the power storage device 100 and/or the load device 300 and perform verification thereto; and in some other embodiments, the bridge device 200 can receive the authentication information by utilizing a physical connection with the power storage device 100 and/or the load device 300.

In some embodiments, the power storage device 100 includes a device management unit 140, which is electrically connected to the power storage unit 120 within the power storage device 100; the bridge device 200 includes a bridge control unit 240, which is electrically connected to the electrical connection unit 220; and the load device 300 includes a load control unit 320, which communicates with the load component(s) 310 to conduct management and control during operation of the load device 300. In some embodiments, the bridge device 200 conducts said authentication by utilizing the bridge control unit 240 to communicate with the device management unit 140 and/or the load control unit 320. In here, the bridge control unit 240, the device management unit 140 and the load control unit 320 may be provided with essential electronic components to enable authentication, such as processors, storage components, communication interfaces, etc. In the embodiment where the load device 300 is an electric vehicle and the power storage device 100 is a battery pack, the device management unit 140 is a battery management system (BMS); the power storage unit 120 is one or more battery cell; the load control unit 320 is an electronic control unit (ECU) or a vehicle control unit (VCU) of the electric vehicle; and the load components 310 are components within the electric vehicle to the likes of an electric motor, an instrument assembly, a motor controller, etc.

In some embodiments, the communication between the bridge control unit 240 and the device management unit 140 and/or the load control unit 320 can be realized through suitable wireless communication or wired communication. Preferably, the wireless communication refers to Near Field Communication (NFC) or Radio Frequency Identification (RFID), but can also be Bluetooth, ZigBee, ultra-wideband, low-power Bluetooth and/or other communication measures. Of course, the present invention should not be limited thereto. Alternatively, wired communication may refer to a physical connection between the bridge control unit 240, the device management unit 140 and/or the load control unit 320 for information transfer.

In some embodiments, the authentication between the bridge control unit 240 and the device management unit 140 is a two-way authentication. In other words, in addition to the authentication conducted by the bridge control unit 240 for the device management unit 140, the device management unit 140 is also configured to conduct authentication for the bridge device 200 to verify that the bridge device 200 is a device authorized to transfer the electric power of the correspondingly authorized power storage device 100 to the load device 300. In here, the device management unit 140 communicates with the bridge control unit 240 and receives the authentication information regarding the bridge device 200 or the load device 300 from the bridge control unit 240 and verifies thereto, thereby completing the two-way authentication. In some embodiments, if the bridge control unit 240 fails to pass the authentication (i.e., the bridge device 200 is not a device authorized to couple with the power storage device 100), the device management unit 140 will prohibit the power storage device 100 to output electric power.

In some embodiments, the bridge control unit 240 is configured to report (e.g., send a notification message) result of the authentication conducted for the load control unit 320 back to the device management unit 140. Specifically, in situation where the authentication conducted for the load control unit 320 by the bridge control unit 240 indicates failure (i.e., the load device 300 is an unauthorized equipment product), the device management unit 140 will prohibit the power storage device 100 to output electric power according to the result reported back by the bridge control unit 240.

In some embodiments, the power storage device 100 is configured to conduct an electric power output under a discharging limit upon coupling with the bridge device 200 and before any authentication is conducted by arbitrary components within the system 10. This electric power output under the discharging limit is to supply electric power to the bridge control unit 240 of the bridge device 200 and the load control unit 320 of the load device 300, so as to wake up the bridge control unit 240 and the load control unit 320 for conducting the aforementioned authentication. In situation where authentication(s) among the device management unit 140, the bridge control unit 240, and the load control unit 320 all indicate successful (i.e., the power storage device 100, the bridge device 200 and the load device 300 are all authorized devices), the device management unit 140 then lifts the discharging limit and adjust the electric power output of the power storage device 100 to normal discharge (i.e., the power storage device 100 can start to supply electric power to other load components 310 of the load device 300 under its range for electric power output without limitation). On the other hand, for a situation where said authentication(s) indicate failure, the device management unit 140 will prohibit the power storage device 100 to output electric power.

**In** other words, authentications among the power storage device 100, the bridge device 200 and the load device 300 must be completed before the power storage device 100 is allowed to supply electric power to the load device 300 normally. However, in this scenario, the bridge control unit 240 and the load control unit 320 need to acquire electric power to conduct said authentications before the power storage device 100 discharges normally. Therefore, the electric power output under the discharging limit conducted by the power storage device 100 is configured at a level sufficient to support operations of the bridge control unit 240 and the load control unit 320 in advance. With this configuration, the bridge control unit 240 and the load control unit 320 do not need to rely on an additional backup battery to maintain the operation thereof before the power storage device 100 discharges normally (i.e., during the load device 300 is powered off). Further, compared to directly subjecting the load device 300 to the electric power from normal discharge of the power storage device 100, this configuration can also protect the load component 310 from damaged usage life induced by bearing a relatively large electric power instantly.

Specifically, the aforementioned electric power output under discharging limit by the power storage device 100 may be confined to one or more of the conditions below: an electric power output under a power limit; an electric power output under a current limit; or an electric power output under a time limit. **In** preferred embodiments, if the authentications among the power storage device 100, the bridge device 200, and the load device 300 failed to complete within the time limit of the discharging limit (i.e., the authentications failed), the device management unit 140 then prohibits electric power output of the power storage device 100. In other optional embodiments, the electric power output under the power limit or the current limit may also be supplied to the load components 310 of the load device 300, but the electric power output under this condition is not sufficient to enable operation of the load components 310, and the electric power output by the power storage device 100 will be prohibited by the device management unit 140 when the bridge control unit 240 reports authentication failure for the power storage device 100 and/or the load device 300 to the device management unit 140, or when the device management unit 140 has determined authentication failure for the bridge device 200.

More specifically, said electric power output under the power limit refers to adjusting the output power value to be less than or equal to one-twentieth (five percent) of the maximum output power value of the power storage device 100; the electric power output under the current limit refers to adjusting the output current value to be less than or equal to one-twentieth (five percent) of the maximum output current value of the power storage device 100; and the electric power output under the time limit refers to confining the electric power to be output in a time period greater than 0 second and less than or equal to 15 seconds. The maximum output power value and the maximum output current value described herein refer to the maximum physical quantity for electric power being provided externally by the power storage device 100 per unit time during a normal discharge. For example, for a battery pack used in an electric vehicle, the maximum output power value can be 5000 Watt (W), and the maximum output current value can be 250 Amperes (A). However, according to variance in electricity supply applications for the power storage device 100, physical quantities for normal discharge may be configured differently. For example, the maximum output power value and the maximum output current value of the power storage device 100 may be 1000 W and 20 A, respectively.

For example, the electric power output under the discharging limit conducted by the power storage device 100 refers to the following: in situation where the maximum output power value can reach 5000 W and the maximum output current value can reach 100 A for the power storage device 100 under normal discharge, the power storage device 100 is configured to conduct an electric power output under a discharging limit that lasts for 15 seconds (or less), has a power value of 250 W (or less) and has an current value of 5 A (or less) upon coupling with the bridge device 200 and before any authentication is conducted by arbitrary components within the system 10. On this basis, authentications among the power storage device 100, the bridge device 200, and the load device 300 must be completed during the period of the electric power output under this discharging limit, or else subsequent electric power output of the power storage device 100 will be prohibited by the device management unit 140. It should be noted that the various limitations as mentioned above can be configured as other applicable values depending on requirements for the device management unit 140, the bridge control unit 240 and/or the load control unit 320 to complete the authentication, and other types of discharging limits can be also introduced, of which the present invention is not limited thereto.

In some embodiments, the device management unit 140 can be configured with a switch 142 that is toggled between an ON state and an OFF state. When the switch 142 is toggled to ON state, the power storage device 100 is allowed to discharge, and when the switch 142 is toggled to OFF state, the power storage device 100 is prohibited to discharge. For example, the switch 142 can be toggled to the ON state by the device management unit 140 in response to the power storage device 100 coupling with the bridge device 200, and enable the power storage device 100 conduct the aforementioned electric power output under the discharging limit to supply electric power to the bridge control unit 240 and the load control unit 320. In the above situation, the device management unit 140 will keep the switch 142 at ON state and lift the discharging limit when the authentications among the power storage device 100, the bridge device 200 and the load device 300 are determined as successful, thereby enable adjustments of the electric power output of the power storage device 100 to normal discharge (i.e., the electric power being output will not be limited by the power value and/or the current value confined by the discharging limit) that is sufficient to supply the operation of the entire system 10 (including the load components 310). On the contrary, in situation where the above authentications indicate failure, the device management unit 140 will toggle the switch 142 to OFF state and prohibit the power storage device 100 to discharge.

In some alternative embodiments, the bridge device 200 may be a non-independent component that is integrated with the load device 300, that is, the system 10 is not configured with the bridge device 200. In here, the load device 300 can be configured to: include the electrical connection unit 220 and provide a bridging path for receiving the electric power provided by the power storage device 100; and integrate the bridge control unit 240 as the load control unit 320 of the load device 300, which is configured to additionally conduct, when the electrical connection unit 130 of the power storage device 100 is coupled to the electrical connection unit 220, the aforementioned tasks of the bridge control unit 240 such as verifying authentication information of the device management unit 140, providing authentication information to the device management unit 140 for verification, reporting authentication result, etc.

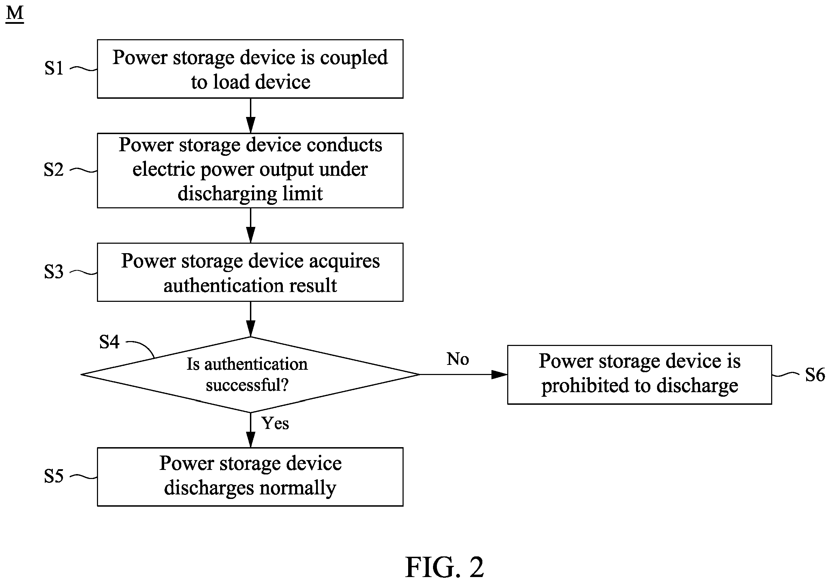

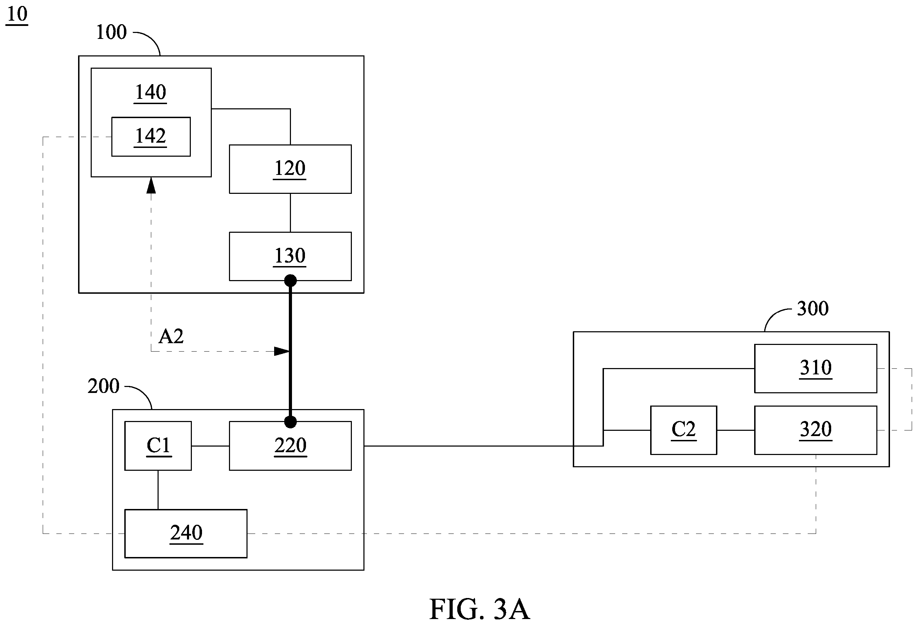

FIG. 2 is a flowchart for steps of a method M according to some embodiments of the present invention. FIGs. 3A to 3E exemplarily illustrates operation status of respective components of the system 10 during the corresponding steps of the method M, in which the solid lines indicate delivery paths for electric power, and the dashed lines indicate transmission paths for signals. Specifically, the method for discharging the power storage device 100 in the present invention mainly includes steps S1 to S6.

Reference may be made to FIG. 3A, where step S1 describes detecting an event where the power storage device 100 is coupled to the load device 300. The event in particular refers to a connection event where the electrical connection units 130 and 220 being coupled to each other when the power storage device 100 is mounted on the bridge device 200. In preferred embodiments, said connection event is detected by the device management unit 140. As indicated by arrow A2, the device management unit 140 can determine the connection event by sensing a closed-circuit condition of the electrical connection between the power storage device 100 and the bridge device 200 (and subsequently, the load device 300) established by the coupling between the electrical connection units 130 and 220. In alternative embodiments, one or more sensing components disposed in the power storage device 100 and/or on the bridge device 200 or the load device 300 can be utilized for sensing and reporting the connection event to the device management unit 140. For example, the sensing components can be positioned to be in contact with the power storage device 100 when the power storage device 100 is coupled to the load device 300, and configured to report the connection event when abutting the power storage device 100.

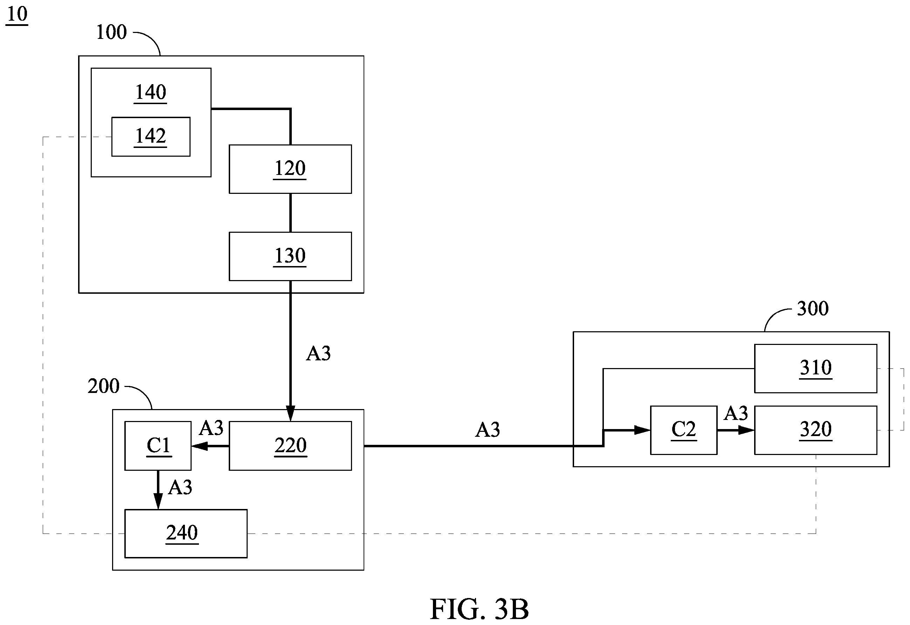

Reference can be made to FIG. 3B, where step S2 describes enabling the power storage device 100 to conduct an electric power output under a discharging limit. The electric power output under the discharging limit in particular refers to having the power storage device 100 provide electric power merely sufficient for operation of the bridge control unit 240 and the load control unit 320. As indicated by arrow A3, in response to the connection event sensed in step S1, the device management unit 140 will impel (e.g., toggle the switch 142 to ON state) the power storage device 100 to output the electric power stored in the power storage unit 120 under the discharging limit to the bridge device 200 and the load device 300 through the electrical connection unit 130. This electric power output under the discharging limit will be used to wake up the bridge control unit 240 and the load control unit 320 for conducting the authentication in step S3.

In some embodiments, the path for electric power output under the discharging limit conducted by the power storage device 100 at step S2 may include electric energy converters C1 and C2, which are respectively used to convert electric power into physical characteristics suitable for operations of the electrically connected bridge control unit 240 and load control unit 320. Specifically, the electric energy converters C1 and C2 may be DC-DC converters, where the electric energy converter C1 is used to convert the 48-volt (V) direct current provided by the power storage device 100 into a 12 V direct current for supplying operation of the bridge control unit 240, and the electric energy converter C2 is used to convert the 48 V direct current provided by the power storage device 100 into direct current of a suitable low electric potential (such as a direct current of 20 V or below) for supplying operation of the load control unit 320. It should be understood that there may exist other electric energy converters in response to operation requirements of respective components in the system 10 to supply operation of other components within the bridge device 200 or the load device 300, or there may be no electric energy converters, of which the present invention is not limited thereto.

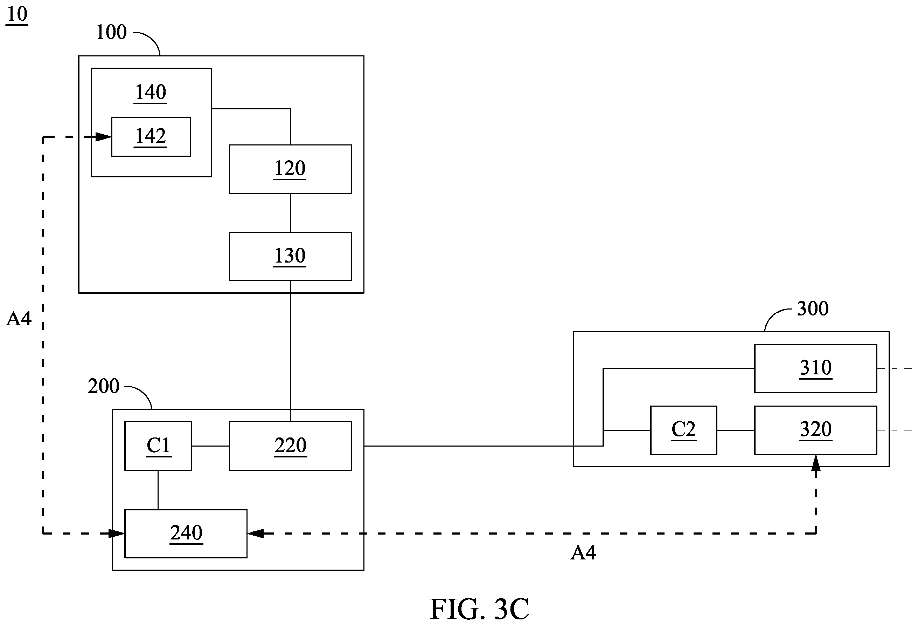

Reference can be made to FIG. 3C, where step S3 describes confirming acquisition for the authentication result at the power storage device 100 regarding the authentications conducted among the power storage device 100, the bridge device 200 and/or the load device 300. The authentication result in particular refers to the result confirmed by the device management unit 140 that is reported (e.g., having the bridge control unit 240 to send a notification message to the device management unit 140) after authentication during the electric power output under the discharging limit by the power storage device 100 is conducted. As indicated by arrow A4, conducting of authentication may refer to: having the bridge control unit 240 to communicate with the load control unit 320 and verify that the load device 300 is an equipment product authorized to receive electric power from the power storage device 100; having the bridge control unit 240 to communicate with the device management unit 140 and verify that the power storage device 100 is an authorized device to supply electricity to the load device 300; and/or having the device management unit 140 to communicate with the bridge control unit 240 and verify that the bridge device 200 is an authorized device to transfer the electric power of the power storage device 100. Alternatively, if the system 10 is not configured with the bridge device 200 (e.g., the bridge device 200 is integrated with the load device 300), conducting of authentication may refer to one-way or two-way authentication between the load control unit 320 and the device management unit 140, of which the details thereof are not repeated herein.

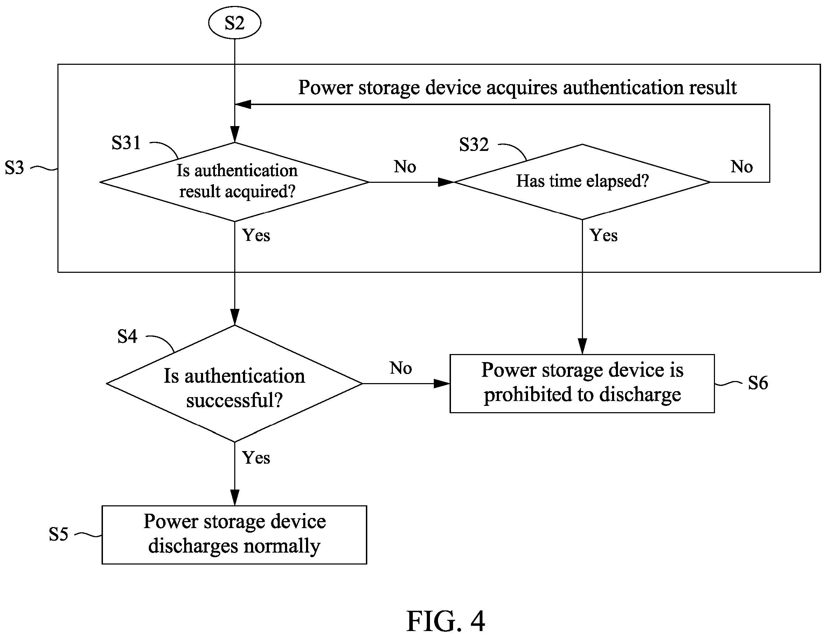

Reference is now made to FIG. 4, where a detail flow chart of step S3 is illustrated. Step S3 may further include steps S31 and S32.

Step S31 describes having the device management unit 140 confirm whether the power storage device 100 has indeed acquired an authentication result. **If** "yes", the method continues to step S4 to make a subsequent determination regarding the authentication result. If "no", the method enters step S32.

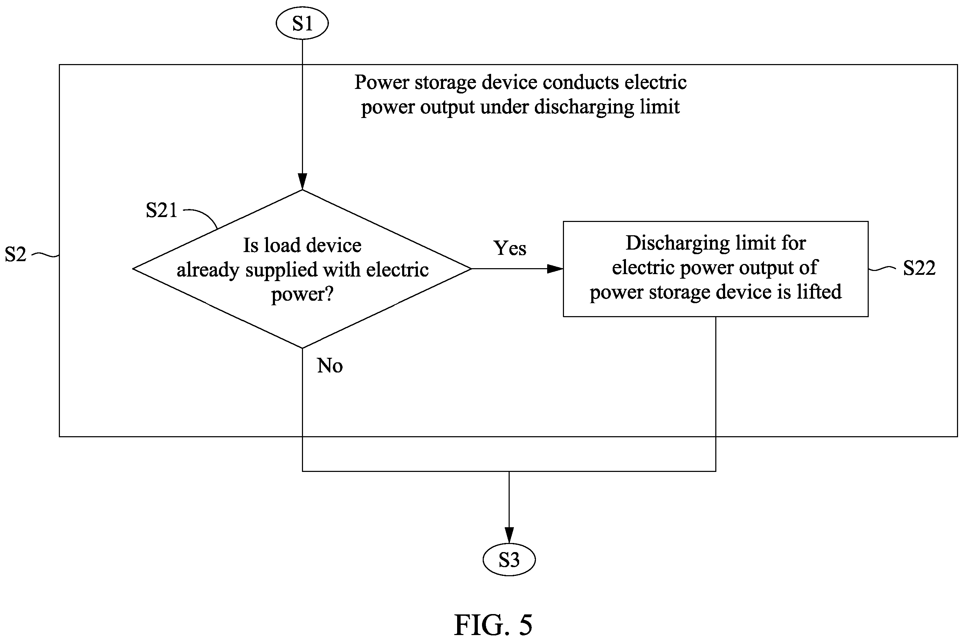

Step S32 describes a situation where the device management unit 140 determines the authentication result has yet been acquired, from which a further confirmation can be made regarding whether a predetermined authentication time has elapsed since the power storage device 100 started the electric power output under the discharging limit. Said authentication time may be the time limit (e.g., 15 seconds) confined by the aforementioned discharging limit; or a predetermined time set up in advance for completing the authentication. Accordingly, the device management unit 140 will continue to wait for acquisition of the authentication result if the time has not exceeded. However, if time has exceeded, the device management unit 140 will determine the authentication as failure and prohibit the power storage device 100 to discharge (step S6). Configuration of the steps in FIG. 5 can prevent the power storage device 100 from continued discharge that leads to self-loss of electric power due to incompleteness on conducting of authentication (e.g., due to failing to receive the authentication information, poor communication environment, inordinate processing time for verification, etc.).

Continue to step S4 of FIG. 2, where step S4 describes the power storage device 100 conducting a corresponding discharge method in accordance with the authentication result acquired. The discharge method in particular refers to a decision by the device management unit 140 regarding whether to prohibit the power storage device 100 from discharging based on determination of the authentication result.

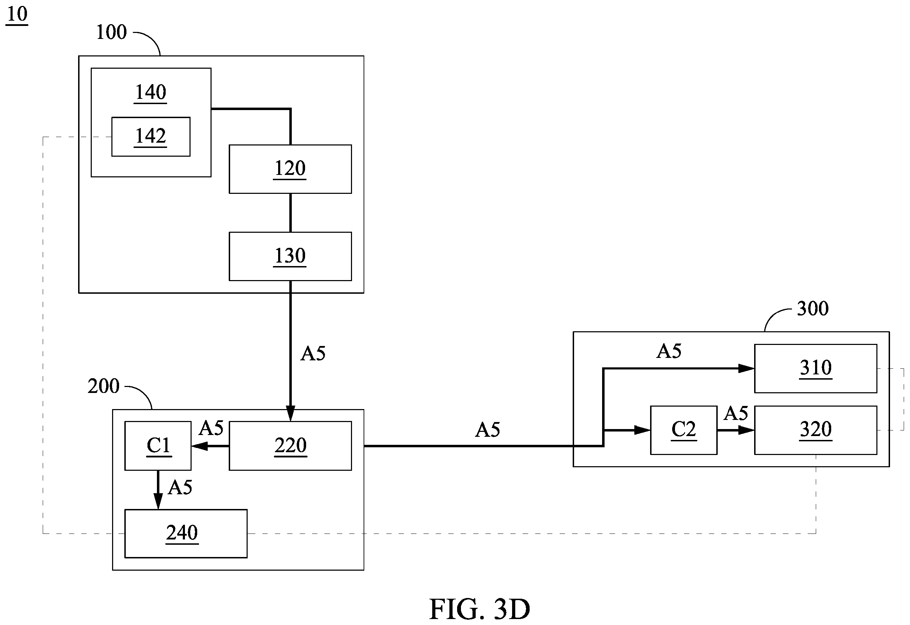

Reference is now made to FIG. 3D, where in the case that the result of step S4 is "yes" (i.e., the authentication results all indicate successful), the device management unit 140 then keeps the switch 142 at ON state and lifts the discharging limit at step S5, thus enabling the electric power output of the power storage device 100 be adjusted to normal discharge (i.e., the electric power being output will not be limited by the power value and/or current value confined by the discharging limit). Here, as indicated by arrow A5, the electric power output by the power storage device 100 will be supplied to all components (including the load components 310) in the system 10.

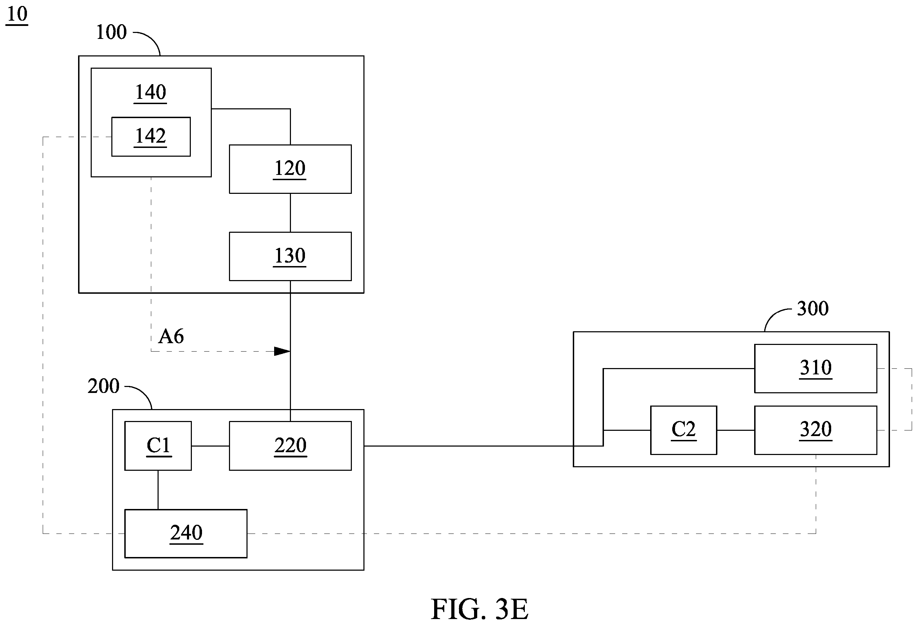

Reference is now made to FIG. 3E, where in the case that the result of step S4 is "no" (i.e., an arbitrary one of the authentication results indicates failure), the device management unit 140 toggles the switch 142 to OFF state at step S6. Here, as indicated by arrow A6, the device management unit 140 will prohibit the power storage device 100 from outputting electric power to the bridge device 200 and the load device 300.

In additional embodiments, there may exist implementations where said power storage device 100 of the present invention is provided on a load device 300 with backup battery that is intact, or a load device 300 that is supplied by more than one power storage device 100 (i.e., the load device 300 is formed with more than one accommodating space for mounting the power storage device 100). Accordingly, considering situation where the load device 300 is already supplied with electric power when the power storage device 100 is coupled with the load device 300 (i.e., a predetermined electric power output under the discharging limit by the power storage device 100 is not required by the bridge control unit 240 and/or the load control unit 320), the detailed flow of step S2 of the method M may further include steps S21 and S22.

Reference may be made to FIG. 5, where in step S2, the device management unit 140 may first conduct step S21, in response to the connection event sensed at step S1, and determine whether the bridge control unit 240 and/or the load control unit 320 (i.e., load device 300) electrically connected thereto is already under an electrically supplied state. In a preferred embodiment, the determination for electrically supplied state may be based on another notification message received by the device management unit 140 from the bridge control unit 240, or based on other suitable means. Next, if the result for step S21 is "yes" (e.g., the bridge control unit 240 and/or the load control unit 320 is already supplied with electric power by the backup battery, or the load device 300 is already mounted with another power storage device 100 that indicates successful in authentication and is currently supplying electric power under normal discharge), then step S22 can be proceed with the device management unit 140 maintaining the switch 142 at ON state and lifting the discharging limit, so as to conduct later steps of the method M with the power storage device 100 having electric power output adjusted to normal discharge. On the contrary, if the result of step S21 is "no" (e.g., the bridge control unit 240 and/or the load control unit 320 is not supplied with electric power by a backup battery or another power storage device 100), then the device management unit 140 similarly maintains the switch 142 at **ON** state but enables the power storage device 100 to complete the later steps of the method M using electric power output under the discharging limit.

Based on the above description, the power storage device and the method for discharging the same according to the present invention mainly precondition the power storage device to conduct electric power output under a discharging limit for a control unit on a load device, and only lifts the discharging limit when the authentication(s) between the power storage device and the load device indicates successful. Therefore, if the load device is configured without a backup battery or with a damaged backup battery, the operation of the load control unit can be maintained through the electric power under the discharging limit, thereby achieve mutual authentication with the power storage device, and prevent damage caused to the load device when bearing excessive electric power upon connected to the power storage device.

## Claims

1. A power storage device (100), comprising:
a power storage unit (120) configured to store electric power;
an electrical connection unit (130), configured to be electrically connected with the power storage unit (120) and coupled with a load device (300); and
a device management unit (140) electrically connected with the power storage unit (120) and configured to:
detect a connection event regarding coupling of the electrical connection unit (130) with another electrical connection unit (220) on the load device (300);
**characterized in that** the device management unit (140) is further configured to:
in response to the connection event, output the electric power to the load device (300) through the electrical connection unit (220) under a discharging limit;
confirm an authentication result between the power storage device (100) and the load device (300) during output of the electric power under the discharging limit; and
lift the discharging limit for output of the electric power if the authentication result indicates to be successful authentication;
wherein the authentication result is reported back to the device management unit (140) by a bridge control unit (240), and wherein the bridge control unit (240) is on the load device (300) and is electrically connected with the another electrical connection unit (220);
wherein a means for the device management unit (140) confirming the authentication result indicates to be failed authentication comprises the following conditions:
the bridge control unit (240) fails to verify a first authentication information from the device management unit (140); and
the bridge control unit (240) fails to verify a second authentication information from a load control unit (320) of the load device (300).

2. The power storage device (100) of claim 1, wherein the device management unit (140) is further configured to:
prohibit output of the electric power to the load device (300) if the authentication result indicates to be failed authentication.

3. The power storage device (100) of any one of claims 1 to 2, wherein a means for the device management unit (140) confirming the authentication result indicates to be failed authentication comprises confirming the device management unit (140) failing to receive the authentication result within a time limit confined by the discharging limit, and wherein the time limit confines the electric power to be output within a time less than or equal to 15 seconds.

4. The power storage device (100) of any one of claims 1 to 3, wherein the discharging limit confines the electric power of the power storage unit (120) to be output at a power value less than or equal to one-twentieth of a maximum output power value of the power storage device (100); or
the discharging limit confines the electric power of the power storage unit (120) to be output at a current value less than or equal to one-twentieth of a maximum output current value of the power storage device (100).

5. A method for discharging a power storage device (100), comprising:
detecting a connection event regarding coupling of the power storage device (100) with a load device (300);
**characterized in that** the method further comprises:
in response to the connection event, enabling the power storage device (100) to conduct an electric power output to the load device (300) under a discharging limit;
confirming an authentication result between the load device (300) and the power storage device (100) during the electric power output under the discharging limit by the power storage device (100);
if the authentication result indicates to be successful authentication, lifting the discharging limit of the electric power output by the power storage device (100); and
if the authentication result indicates to be failed authentication, prohibiting the electric power output by the power storage device (100);
wherein the authentication result is reported back to the power storage device (100) by a bridge device (200), and the bridge device (200) is electrically connected to the load device (300);
wherein a means for confirming the authentication result indicates to be failed authentication comprises the following conditions:
the bridge device (200) fails to verify a first authentication information from the power storage device (100); and
the bridge device (200) fails to verify a second authentication information from the load device (300).

6. The method of claim 5, wherein a means for confirming the authentication result indicates to be failed authentication comprises confirming the power storage device (100) failing to receive the authentication result within a time limit confined by the discharging limit, and wherein the time limit confines a time for the electric power output to be less than or equal to 15 seconds.

7. The method of any one of claims 5 to 6, wherein the discharging limit confines a power value for the electric power output to be less than or equal to one-twentieth of a maximum output power value of the power storage device (100); or
the discharging limit confines a current value for the electric power output to be less than or equal to one-twentieth of a maximum output current value of the power storage device (100).

8. The method of any one of claims 5 to 7, wherein the step of detecting the connection event regarding the power storage device (100) coupling with the load device (300) comprises:
sensing a closed-circuit condition of an electrical connection between the power storage device (100) and the load device (300).

9. The method of any one of claims 5 to 8, further comprising:
confirming an electrically supplied state of the load device (300); and
if the electrically supplied state indicates to be supplied with electric power, enabling the power storage device (100) to confirm the authentication result free from the discharging limit.

## Patentansprüche

1. Leistung-Speicher-Vorrichtung (100), die aufweist:
eine Leistung-Speicher-Einheit (120), die zum Speichern von elektrischer Leistung konfiguriert ist;
eine Elektrische-Verbindung-Einheit (130), die konfiguriert ist, um elektrisch mit der Leistung-Speicher-Einheit (120) verbunden und mit einer Ladevorrichtung (300) gekoppelt zu sein; und
eine Vorrichtung-Verwaltung-Einheit (140), die elektrisch mit der Leistung-Speicher-Einheit (120) verbunden und konfiguriert ist, um:
ein Verbindungsereignis bezüglich Koppeln der Elektrische-Verbindung-Einheit (130) mit einer weiteren Elektrische-Verbindung-Einheit (220) an der Ladevorrichtung (300) zu erfassen;
**dadurch gekennzeichnet, dass** die Vorrichtung-Verwaltung-Vorrichtung-Verwaltung-Einheit (140) ferner konfiguriert ist, um:
in Reaktion auf das Verbindungsereignis die elektrische Leistung über die Elektrische-Verbindung-Einheit (220) unter einer Entladungsgrenze an die Ladevorrichtung (300) auszugeben;
ein Authentifizierungsergebnis zwischen der Leistung-Speicher-Vorrichtung (100) und der Ladevorrichtung (300) während Ausgebens der elektrischen Leistung unter der Entladungsgrenze zu bestätigen; und
die Entladungsgrenze aufzuheben für Ausgabe der elektrischen Leistung, falls das Authentifizierungsergebnis eine erfolgreiche Authentifizierung anzeigt;
wobei das Authentifizierungsergebnis von einer Brücke-Steuer-Einheit (240) an die Vorrichtung-Verwaltung-Einheit (140) zurückgemeldet wird, und wobei die Brücke-Steuer-Einheit (240) auf der Vorrichtung (300) ist und elektrisch mit der weiteren Elektrische-Verbindung-Einheit (220) verbunden ist;
wobei ein Mittel für die Vorrichtung-Verwaltung-Einheit (140) zum Bestätigen, dass das Authentifizierungsergebnis eine fehlgeschlagene Authentifizierung anzeigt, die folgenden Bedingungen aufweist:
die Brücke-Steuer-Einheit (240) scheitert daran, eine erste Authentifizierungsinformation von der Vorrichtung-Verwaltung-Einheit (140) zu verifizieren; und
die Brücke-Steuer-Einheit (240) scheitert daran, eine zweite Authentifizierungsinformation von einer Last-Steuer-Einheit (320) der Ladevorrichtung (300) zu verifizieren.

2. Leistung-Speicher-Vorrichtung (100) nach Anspruch 1, wobei die Vorrichtung-Verwaltung-Einheit (140) ferner konfiguriert ist, um:
Ausgeben von elektrischer Leistung an die Ladevorrichtung (300) zu verbieten, falls das Authentifizierungsergebnis eine fehlgeschlagene Authentifizierung anzeigt.

3. Leistung-Speicher-Vorrichtung (100) nach irgendeinem der Ansprüche 1 bis 2, wobei ein Mittel für die Vorrichtung-Verwaltung-Einheit (140) zum Bestätigen, dass das Authentifizierungsergebnis eine fehlgeschlagene Authentifizierung anzeigt, aufweist Bestätigen, dass die Vorrichtung-Verwaltung-Einheit (140) das Authentifizierungsergebnis nicht innerhalb einer durch die Entladungsgrenze beschränkten Zeitgrenze empfangen hat, und wobei die Zeitgrenze die auszugebende elektrische Leistung auf eine Zeit von weniger als oder gleich 15 Sekunden beschränkt.

4. Leistung-Speicher-Vorrichtung (100) nach irgendeinem der Ansprüche 1 bis 3, wobei die Entladungsgrenze die auszugebende elektrische Leistung der Leistung-Speicher-Einheit (120) auf einen Leistungswert von weniger als oder gleich einem Zwanzigstel eines maximalen Ausgabe-Leistung-Werts der Leistung-Speicher-Vorrichtung (100) beschränkt; oder
die Entladungsgrenze die auszugebende elektrische Leistung der Leistung-Speicher-Einheit (120), auf einen Stromwert, der kleiner oder gleich einem Zwanzigstel eines maximalen Ausgabe-Strom-Werts der Leistung-Speicher-Vorrichtung (100) ist, beschränkt.

5. Verfahren zum Entladen einer Leistung-Speicher-Vorrichtung (100), das aufweist:
Erfassen eines Verbindungsereignisses bezüglich der Kopplung der Leistung-Speicher-Vorrichtung (100) mit einer Ladevorrichtung (300);
**dadurch gekennzeichnet, dass** das Verfahren ferner aufweist:
als Reaktion auf das Verbindungsereignis, Ermöglichen, dass die Leistung-Speicher-Vorrichtung (100) eine Elektrische-Leistung-Ausgabe an die Ladevorrichtung (300) unter einer Entladungsgrenze durchführt;
Bestätigen eines Authentifizierungsergebnisses zwischen der Ladevorrichtung (300) und der Leistung-Speicher-Vorrichtung (100) während der Elektrische-Leistung-Ausgabe unter der Entladungsgrenze durch die Leistung-Speicher-Vorrichtung (100);
falls das Authentifizierungsergebnis eine erfolgreiche Authentifizierung anzeigt, Aufheben der Entladungsgrenze der Elektrische-Leistung-Ausgabe durch die Leistung-Speicher-Vorrichtung (100); und
falls das Authentifizierungsergebnis eine fehlgeschlagene Authentifizierung anzeigt, Verbieten des Elektrische-Leistung-Ausgebens durch die Leistung-Speicher-Vorrichtung (100);
wobei das Authentifizierungsergebnis von einer Brückenvorrichtung (200) an die Leistung-Speicher-Vorrichtung (100) zurückgemeldet wird und die Brückenvorrichtung (200) elektrisch mit der Ladevorrichtung (300) verbunden ist;
wobei ein Mittel zum Bestätigen des Authentifizierungsergebnisses, das eine fehlgeschlagene Authentifizierung anzeigt, die folgenden Bedingungen aufweist:
die Brückenvorrichtung (200) scheitert daran, eine erste Authentifizierungsinformation von der Leistung-Speicher-Vorrichtung (100) zu verifizieren; und
die Brückenvorrichtung (200) scheitert daran, eine zweite Authentifizierungsinformation von der Ladevorrichtung (300) zu verifizieren.

6. Verfahren nach Anspruch 5, wobei ein Mittel zum Bestätigen des Authentifizierungsergebnisses, das eine fehlgeschlagene Authentifizierung anzeigt, aufweist, dass die Leistung-Speicher-Vorrichtung (100) daran scheitert, das Authentifizierungsergebnis innerhalb einer durch die Entladungsgrenze beschränkten Zeitgrenze zu empfangen, und wobei die Zeitgrenze eine Zeit für die Elektrische-Leistung-Ausgabe auf weniger als oder gleich 15 Sekunden beschränkt.

7. Verfahren nach irgendeinem der Ansprüche 5 bis 6, wobei die Entladungsgrenze einen Leistungswert für die Elektrische-Leistung-Ausgabe auf weniger als oder gleich ein Zwanzigstel eines maximalen Ausgang-Leistung-Werts der Leistung-Speicher-Vorrichtung (100) begrenzt; oder
die Entladungsgrenze einen Stromwert für die Elektrische-Leistung-Ausgabe auf weniger als oder gleich ein Zwanzigstel eines maximalen Ausgang-Strom-Werts der Leistung-Speicher-Vorrichtung (100) begrenzt.

8. Verfahren nach irgendeinem der Ansprüche 5 bis 7, wobei der Schritt des Erfassens des Verbindungsereignisses bezüglich Koppeln der Leistung-Speicher-Vorrichtung (100) mit der Ladevorrichtung (300) aufweist:
Erfassen einer Geschlossener-Stromkreis-Bedingung einer elektrischen Verbindung zwischen der Leistung-Speicher-Vorrichtung (100) und der Ladevorrichtung (300).

9. Verfahren nach irgendeinem der Ansprüche 5 bis 8, das ferner aufweist:
Bestätigen eines elektrisch versorgten Zustands der Ladevorrichtung (300); und
falls der elektrisch versorgte Zustand anzeigt, dass mit elektrischer Leistung versorgt werden soll, Ermöglichen, dass die Leistung-Speicher-Vorrichtung (100) das Authentifizierungsergebnis bestätigt, frei von der Entladungsgrenze zu sein.

## Revendications

1. Dispositif de stockage de puissance (100),
comprenant :
une unité de stockage de puissance (120) configurée pour stocker de la puissance électrique ;
une unité de connexion électrique (130), configurée pour être connectée électriquement à l'unité de stockage de puissance (120) et couplée à un dispositif de charge (300) ; et
une unité de gestion de dispositif (140) connectée électriquement à l'unité de stockage de puissance (120) et configurée pour :
détecter un événement de connexion concernant le couplage de l'unité de connexion électrique (130) avec une autre unité de connexion électrique (220) sur le dispositif de charge (300) ;
**caractérisé en ce que** l'unité de gestion de dispositif (140) est en outre configurée pour :
en réponse à l'événement de connexion, fournir la puissance électrique au dispositif de charge (300) par l'intermédiaire de l'unité de connexion électrique (220) dans une limite de décharge ;
confirmer un résultat d'authentification entre le dispositif de stockage de puissance (100) et le dispositif de charge (300) pendant la fourniture de la puissance électrique dans la limite de décharge ; et
lever la limite de décharge pour la fourniture de la puissance électrique si le résultat d'authentification indique une réussite d'authentification ;
dans lequel le résultat d'authentification est renvoyé à l'unité de gestion de dispositif (140) par une unité de commande de pont (240), et dans lequel l'unité de commande de pont (240) se trouve sur le dispositif de charge (300) et est connectée électriquement à l'autre unité de connexion électrique (220) ;
dans lequel un moyen pour l'unité de gestion de dispositif (140) confirmant que le résultat d'authentification indique un échec d'authentification comprend les conditions suivantes :
l'unité de commande de pont (240) ne parvient pas à vérifier une première information d'authentification provenant de l'unité de gestion de dispositif (140) ; et
l'unité de commande de pont (240) ne parvient pas à vérifier une deuxième information d'authentification provenant d'une unité de commande de charge (320) du dispositif de charge (300).

2. Dispositif de stockage de puissance (100) selon la revendication 1, dans lequel l'unité de gestion de dispositif (140) est en outre configurée pour :
interdire la fourniture de la puissance électrique au dispositif de charge (300) si le résultat d'authentification indique un échec d'authentification.

3. Dispositif de stockage de puissance (100) selon l'une quelconque des revendications 1 à 2, dans lequel un moyen pour l'unité de gestion de dispositif (140) confirmant que le résultat d'authentification indique un échec d'authentification comprend la confirmation que l'unité de gestion de dispositif (140) ne parvient pas à recevoir le résultat d'authentification dans un délai limité par la limite de décharge, et dans lequel le délai limite la puissance électrique à fournir à une durée inférieure ou égale à 15 secondes.

4. Dispositif de stockage de puissance (100) selon l'une quelconque des revendications 1 à 3, dans lequel la limite de décharge limite la puissance électrique de l'unité de stockage de puissance (120) à fournir à une valeur de puissance inférieure ou égale à un vingtième d'une valeur de puissance de sortie maximale du dispositif de stockage de puissance (100) ; ou
la limite de décharge limite la puissance électrique de l'unité de stockage de puissance (120) à fournir à une valeur de courant inférieure ou égale à un vingtième d'une valeur de courant de sortie maximale du dispositif de stockage de puissance (100).

5. Procédé de décharge d'un dispositif de stockage de puissance (100), comprenant :
la détection d'un événement de connexion concernant le couplage du dispositif de stockage de puissance (100) avec un dispositif de charge (300) ;
**caractérisé en ce que** le procédé comprend en outre :
en réponse à l'événement de connexion, l'activation du dispositif de stockage de puissance (100) pour effectuer une fourniture de puissance électrique au dispositif de charge (300) dans une limite de décharge ;
la confirmation d'un résultat d'authentification entre le dispositif de charge (300) et le dispositif de stockage de puissance (100) pendant la fourniture de puissance électrique sous la limite de décharge par le dispositif de stockage de puissance (100) ;
si le résultat d'authentification indique une réussite d'authentification, le levage de la limite de décharge de la fourniture de puissance électrique par le dispositif de stockage de puissance (100) ; et
si le résultat d'authentification indique un échec d'authentification, l'interdiction de la fourniture de puissance électrique par le dispositif de stockage de puissance (100) ;
dans lequel le résultat d'authentification est renvoyé au dispositif de stockage de puissance (100) par un dispositif de pont (200), et le dispositif de pont (200) est connecté électriquement au dispositif de charge (300) ;
dans lequel un moyen pour confirmer que le résultat d'authentification indique un échec d'authentification comprend les conditions suivantes :
le dispositif de pont (200) ne parvient pas à vérifier une première information d'authentification provenant du dispositif de stockage de puissance (100) ; et
le dispositif de pont (200) ne parvient pas à vérifier une deuxième information d'authentification provenant du dispositif de charge (300).

6. Procédé selon la revendication 5, dans lequel un moyen pour confirmer que le résultat d'authentification indique un échec d'authentification comprend la confirmation que le dispositif de stockage de puissance (100) ne parvient pas à recevoir le résultat d'authentification dans un délai limité par la limite de décharge, et dans lequel le délai limite une durée de la fourniture de puissance électrique à une durée inférieure ou égale à 15 secondes.

7. Procédé selon l'une quelconque des revendications 5 à 6, dans lequel la limite de décharge limite une valeur de puissance pour la puissance électrique fournie à une valeur inférieure ou égale à un vingtième d'une valeur de puissance de sortie maximale du dispositif de stockage de puissance (100) ; ou
la limite de décharge limite une valeur de courant pour la puissance électrique fournie à une valeur inférieure ou égale à un vingtième d'une valeur de courant de sortie maximale du dispositif de stockage de puissance (100).

8. Procédé selon l'une quelconque des revendications 5 à 7, dans lequel l'étape consistant à détecter l'événement de connexion concernant le dispositif de stockage de puissance (100) couplé au dispositif de charge (300) comprend :
la détection d'une condition de circuit fermé d'une connexion électrique entre le dispositif de stockage de puissance (100) et le dispositif de charge (300).

9. Procédé selon l'une quelconque des revendications 5 à 8, comprenant en outre :
la confirmation d'un état d'alimentation électrique du dispositif de charge (300) ; et
si l'état d'alimentation électrique indique une alimentation en puissance électrique, l'activation du dispositif de stockage de puissance (100) pour confirmer le résultat d'authentification sans limite de décharge.
